# FASCICULE DE BREVET EUROPEEN

(11) **EP 0 483 338 B1**
(45) Date de publication et mention de la délivrance du brevet: **22.06.1994**
(21) Numéro de dépôt: 91910325.9
(22) Date de dépôt: 17.05.1991
(51) Int. Cl.: G02B 6/32, G02B 6/38, H04N 7/00, H01B 11/00

(54) **SYSTEME DE CONNEXION OPTIQUE ET SON UTILISATION A LA TRANSMISSION DE SIGNAUX VIDEO**
OPTISCHES VERBINDUNGSSYSTEM ZUR ANWENDUNG IN DER ÜBERTRAGUNG VON VIDEO-SIGNALEN
OPTICAL CONNECTION SYSTEM FOR USE IN THE TRANSMISSION OF VIDEO SIGNALS

(30) Priorité: 18.05.1990 FR 9006247
(43) Date de publication de la demande: 06.05.1992
(73) Titulaire: THOMSON BROADCAST, 95801 Cergy-Saint-Christophe (FR)
(72) Inventeur: DESMONS, Gérard, F-92110 Clichy (FR)
(74) Mandataire: Ruellan-Lemonnier, Brigitte
(86) Numéro de dépôt international: FR9100402
(87) Numéro de publication internationale: WO9118309

(56) Documents cités:
- EP-A- 0 366 346
- WO-A-89/06057
- DE-A- 3 721 060
- FR-A- 2 629 220
- Patent Abstracts of Japan, vol 13, no 82 (P-833)(3430), 23 February 1989 & JP A 63265207

## Description

La présente invention se rapporte à un connecteur optique et à son application à la transmission de signaux vidéo.

Actuellement, différentes technologies de connecteurs optiques sont utilisées.

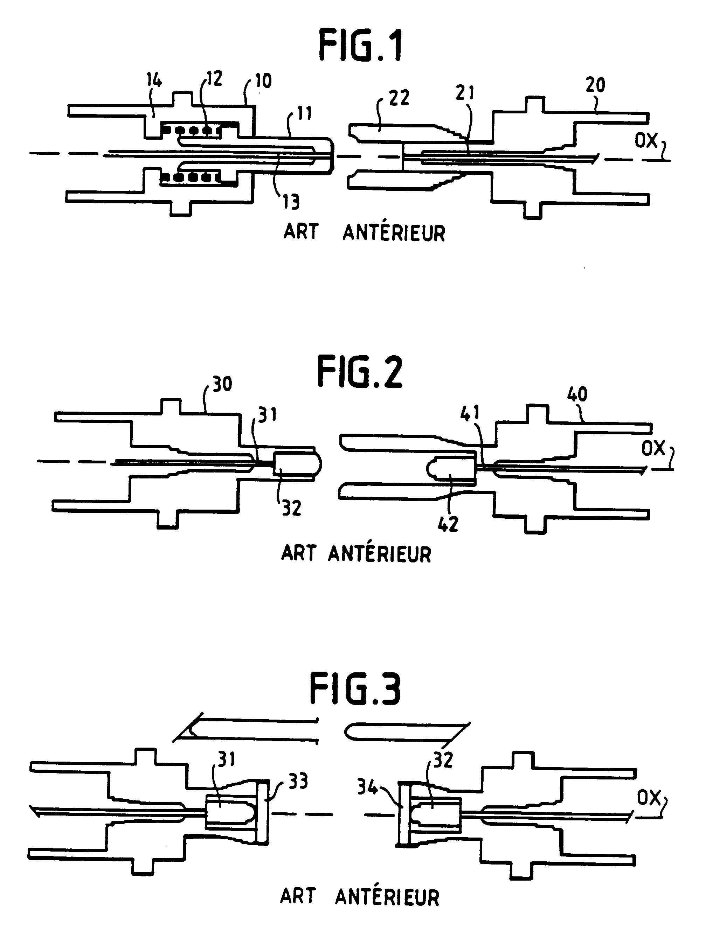

La figure 1 annexée représente une vue en coupe selon un axe longitudinal OX d'un système de connexion optique connu comportant un contact optique à pompe. Cette technologie est notamment utilisée pour le câblage en fibre optique des villes. Le système de connexion comprend deux éléments de connexion complémentaires : un élément mâle, 10, et un élément femelle, 20 complémentaire de l'élément mâle. L'élément mâle, 10, comporte, selon un axe longitudinal OX, un embout 11 à ressort 12. Au centre de l'embout 11 est scellée une fibre optique 13 de même axe. Une pièce métallique, 14, assure le maintien mécanique de l'ensemble. L'élément femelle, 20, comporte selon un axe longitudinal OX, une fibre optique, 21, centrale scellée dans un embout de même calibre que l'embout de l'élément mâle, cet embout étant muni d'une pièce 22, formant un guide, destinée au centrage de l'élément mâle lorsque la connexion est effectuée.

Cette technologie est bien maîtrisée et le montage des contacts optiques nécessite un petit outillage et reste à la portée d'un technicien formé. Cependant, avec une fibre optique ayant un diamètre faible, l'alignement axial et longitudinal des deux fibres, 13, 21, doit être parfait à quelques fractions de micromètres près. De même, en raison du faible diamètre du flux lumineux, ce type de connecteur présente des problèmes de propreté car il ne supporte pas la moindre poussière dans le trajet optique.

La figure 2 annexée représente une vue en coupe selon un axe longitudinal OX, d'un autre système de connexion optique connu comportant un contact optique à lentille. Ce type de connexion est notamment utilisé pour des applications militaires. Il se compose d'un élément mâle, 30, et d'un élément femelle, 40 qui comportent chacune une fibre optique centrale, 31, 41, et de même axe. A l'extrémité de chaque fibre optique 31, 41 et dans son prolongement, est fixée une lentille optique divergente 32,42. Chaque lentille 32,42, fait diverger le faisceau lumineux provenant de la fibre optique ce qui permet de réduire les problèmes d'alignement optique et de poussière dans le trajet optique. Cette technologie est moins critique pour le positionnement de la fibre optique et pour la propreté du contact optique par rapport à la technologie du contact à pompe de la figure 1 ; mais le positionnement de la fibre optique par rapport à la lentille optique doit être parfait. Le câblage de la fibre optique ne peut donc être réalisé que par le fournisseur de l'élément de connexion optique. D'autre part, le polissage et le collage de la fibre sur la lentille optique nécessite un outillage très spécial et très cher que seul le fournisseur possède.

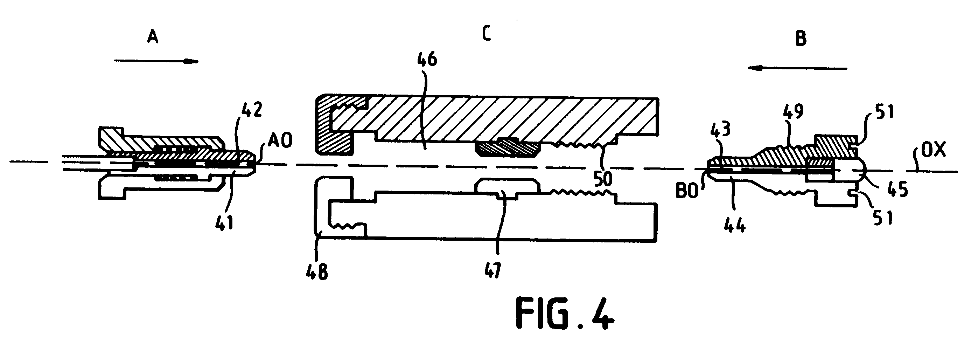

Enfin, la figure 3 annexée représente une vue en coupe d'un troisième système de connexion optique connu comportant un contact optique à lentille avec hublot. Bien que cette technologie soit similaire à celle de la figure 2, chacun des connecteurs mâle et femelle comporte en outre, placé devant chacune des lentilles optiques, 31,32 un hublot de verre extérieur, 33, 34 qui la protège. Le contact optique est ainsi étanche et le nettoyage aisé. Cependant le positionnement de la fibre optique par rapport à la lentille optique est aussi délicat que pour le système de connexion optique de la figure 2.

Une liaison optique n'étant généralement pas réalisée de façon permanente, les éléments de connexion optiques sont fréquemment manipulés, ce qui détériore le contact optique destiné à la liaison optique avec un élément de connexion optique complémentaire. Dans ces conditions, il est nécessaire de remplacer les éléments de connexion optiques et pour cela, dans les différentes technologies de connecteurs optiques connues, il est nécessaire de couper le câble à fibre optique. Le câblage de la fibre optique sur l'embout du connecteur de rechange nécessite alors un outillage spécial et un personnel qualifié.

Le but de l'invention est de résoudre ce problème sans outillage spécial et sans l'intervention d'un spécialiste et de réaliser un système de connexion optique permettant un montage aisé et résolvant les problèmes de positionnement de la fibre optique et de la propreté du contact optique. Pour cela, l'invention concerne un système de connexion optique dans lequel un élément de connexion optique a une structure modulaire et démontable qui permet de dissocier, à l'intérieur du même élément de connexion, le raccordement d'un câble comportant au moins une fibre optique et la transmission du faisceau lumineux au niveau de la connexion optique avec un élément de connexion complémentaire.

A cet effet, un élément de connexion comprend deux parties distinctes positionnées dans une troisième partie, grâce à un système de guidage formant manchon, de façon à obtenir deux contacts optiques distincts.

Les deux parties sont respectivement destinées au câblage de la fibre optique d'un câble et à la connexion optique avec un élément de connexion complémentaire.

La partie destinée à la connexion optique avec un élément de connexion complémentaire est alors une partie interchangeable qui peut être remplacée en cas de détérioration du contact optique destiné à la liaison optique sans avoir à manipuler la fibre optique au niveau du câble.

Connecteur selon l'invention est défini dans la revendication 1; un tel connecteur optique, comporte au moins trois parties distinctes A, B, C, la partie A étant destinée au raccordement d'un câble comportant au moins une fibre optique et comportant un contact optique (AO) monté sur un embout calibré destiné au câblage de la fibre optique du câble ; la partie B étant une partie interchangeable destinée à la transmission d'un faisceau lumineux et comportant une fibre optique dont une extrémité (BO) est fixée dans un embout calibré identique à l'embout de la partie A et destiné à être mis dans le prolongement de l'embout de la partie A et dont une deuxième extrémité comporte un contact optique destiné à la connexion optique avec un élément de connexion complémentaire ; la partie C comportant un système de guidage calibré pour recevoir les embouts calibrés des parties A et B, mettre en contact leurs extrémités respectives et assurer un alignement coaxial très précis à quelques fractions de micromètre près, des deux embouts correspondant à chacune des parties A et B.

D'autres particularités et avantages de l'invention apparaîtront clairement dans la description suivante donnée à titre d'exemple non limitatif et faite en regard des figures annexées qui représentent :
- la figure 1 précitée, une vue en coupe d'un système de connexion optique comportant un contact optique à pompe, selon l'art antérieur,
- la figure 2 précitée, une vue en coupe d'un système de connexion optique comportant un contact optique à lentille, selon l'art antérieur ;
- la figure 3 précitée, une vue en coupe d'un système de connexion optique comportant un contact optique à lentille avec hublot, selon l'art antérieur ;
- la figure 4, une vue en coupe selon un axe longitudinal OX, d'un élément de connexion optique, selon l'invention ;
- la figure 5, un exemple de schéma de montage d'un élément de connexion, selon l'invention ;
- la figure 6, un câble mixte triaxial optique ;
- la figure 7, une coupe partielle selon un axe longitudinal OX, d'un exemple d'utilisation du système de connexion, selon l'invention, à la transmission de signaux vidéo.

La suite de la description se rapporte à un élément du système de connexion. Il est bien entendu que, pour établir une liaison optique, il est nécessaire d'utiliser un deuxième élément de connexion complémentaire du premier élément qui peut avoir une structure similaire composée de trois parties distinctes.

La figure 4 représente une vue en coupe selon un axe longitudinal OX d'un élément de connexion optique, selon l'invention. Cet élément comporte trois parties distinctes, A, B, C, comme le montre la figure 4. La partie A est destinée au câblage de la fibre optique d'un câble optique sur un embout. Elle comporte un contact optique à pompe AO monté sur un embout, 41, d'axe longitudinal OX et calibré de façon précise afin de permettre le positionnement axial de la fibre optique 42 à quelques fractions de micromètre près. La fibre optique 42 est positionnée et scellée dans l'embout, 41, selon une méthode de principe connu.

La partie B est une partie interchangeable destinée à la connexion optique de l'élément avec un élément de connexion complémentaire. Cette partie B comporte en son centre, le long d'un axe longitudinal OX, une fibre optique centrale, 43, et de même axe OX ayant une extrémité BO scellée dans un embout calibré,44, identique à l'embout,41, de la partie A, l'autre extrémité étant fixée à un dispositif à lentille 45 qui assure la divergence du faisceau lumineux lors de la connexion optique. La méthode pour monter et sceller la fibre optique et la positionner par rapport à la lentille est de principe connu.

La partie C est le corps du connecteur et a une symétrie de révolution autour d'un axe longitudinal OX. Cette partie C forme une cavité axiale ouverte, 46, destinée à recevoir les parties A et B de façon à ce que leurs embouts respectifs 41 et 44 soient en contact. L'intérieur de la cavité comporte un guide calibré, 47, permettant un alignement coaxial des embouts 41 et 44 de chacune des parties A et B avec une grande précision à quelques fractions de micromètre près.

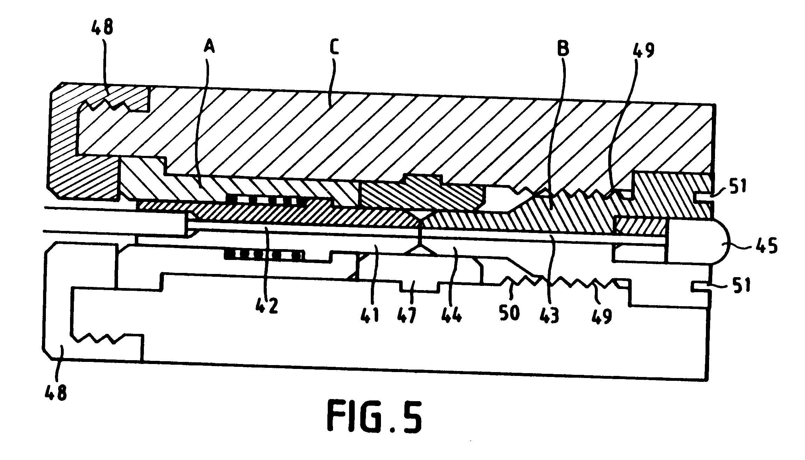

La figure 5 représente un exemple de schéma de montage d'un élément de connexion selon l'invention. Les parties A et B sont positionnées dans le corps du connecteur C et maintenues en position par des moyens de fixation. Sur la figure 5, la partie A est bloquée en position par un dispositif à vis, 48, et la partie B comporte un filetage, 49, permettant de la visser dans le corps du connecteur C qui comporte un filetage, 50, correspondant. Deux encoches, 51, sont prévues pour l'outillage de serrage.

Le système de connexion optique de l'invention peut être utilisé seul ou en combinaison avec un ou plusieurs systèmes de connexion électrique. Ce cas se présente notamment, pour le raccordement d'un câble mixte électrique et optique qui peut par exemple avoir une structure triaxiale et comporter une fibre optique centrale.

Le système de connexion optique selon l'invention, peut être utilisé notamment lors de la transmission, sur une fibre optique, des signaux entre une tête de caméra et son unité de contrôle, en particulier pour la télévision haute définition future (TVHD).

En effet, la transmission des signaux de télévision est généralement effectuée par l'intermédiaire de câbles triaxiaux électriques. Mais pour la télévision haute définition, ce type de câble présente un affaiblissement important des hautes fréquences, et il est préférable d'utiliser une fibre optique pour transmettre les signaux vidéo à large bande. Cependant, des liaisons électriques sont également nécessaires pour transmettre l'alimentation de la caméra et des signaux de services secours ainsi que pour la mise à la terre du câble.

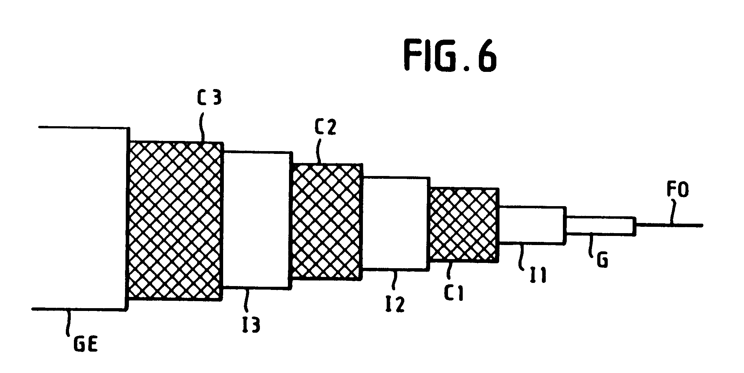

Une structure particulièrement adaptée pour cette application est représentée sur la figure 6. Elle consiste à utiliser un câble mixte triaxial et optique, c'est-à-dire ayant une structure triaxiale constituée le long d'un même axe central d'au moins trois conducteurs électriques C1, C2, C3 tubulaires, concentriques, imbriqués, séparés par des tubes isolants, I1,I2,I3, cette structure triaxiale comportant une fibre optique centrale, FO, de même axe, cette fibre optique étant recouverte d'une gaine, G. Une gaine extérieure GE, protège l'ensemble de la structure du câble.

Pour effectuer le raccordement entre la tête de caméra et son unité de contrôle, le raccordement de la fibre optique au niveau des connecteurs (fiche sur le câble, ou embase sur la caméra) est très délicat. En utilisant un système de connexion mixte électrique et optique dans lequel la partie connexion optique est réalisée selon l'invention, le raccordement peut être effectué, sans prendre de précautions particulières, c'est-à-dire qu'il ne nécessite aucun outillage complexe et aucune obligation de retour au constructeur en cas de service après vente.

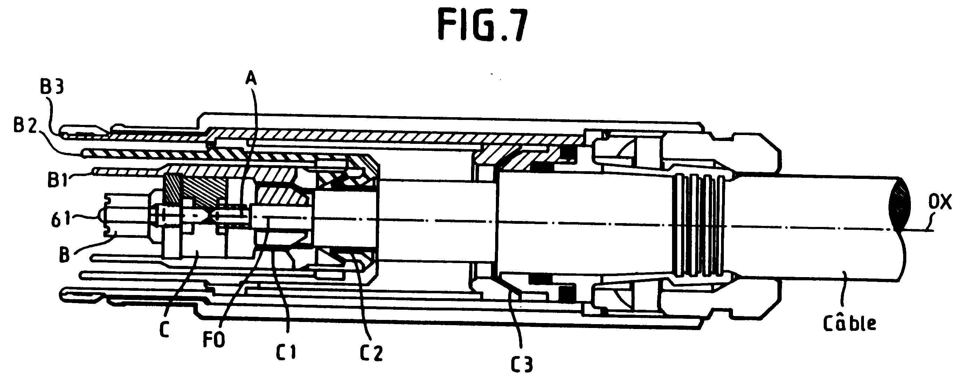

Sur la figure 7 est représentée une coupe partielle selon un axe longitudinal OX d'un exemple d'utilisation du système de connexion à la connexion d'un câble mixte triaxial et optique dans lequel la partie connexion optique est réalisée selon l'invention.

Pour assurer l'interconnexion des signaux optiques et électriques circulant dans un câble mixte triaxial et optique, l'élément de connexion mixte électrique et optique présenté sur la figure 7 comporte :
- un élément de connexion optique, 61, réalisé en trois parties distinctes, A, B, C telles que la partie A comporte un contact optique à pompe dans l'embout duquel est scellée une fibre optique FO centrale recouverte d'une gaine, la partie B comporte un contact optique à lentille destiné à réaliser la connexion avec un élément de connexion optique complémentaire, les parties A et B étant positionnées dans le corps d'un connecteur C où elles sont maintenues en position par des moyens de fixation.
- un élément de connexion électrique de principe connu comportant trois broches métalliques B1,B2,B3 sur lesquelles sont connectés trois conducteurs C1,C2,C3, ces trois conducteurs formant une structure triaxiale. Cet élément de connexion électrique a donc une structure de connecteur triaxiale.

La fibre optique étant disposée au centre de la structure triaxiale du câble mixte, l'élément de connexion optique, 61, est disposé au centre de la structure de d'élément de connexion mixte, l'ensemble des deux éléments de connexion formant ainsi une structure de connexion mixte triaxiale optique.

L'invention n'est pas limitée aux exemples de réalisation précisément décrits, notamment, le système de connexion optique peut être utilisé seul, en combinaison avec un ou plusieurs autres connecteurs optiques, en combinaison avec un ou plusieurs connecteurs électriques. Les contacts optiques des parties A et B ne sont pas obligatoirement des contacts optiques à pompe et à lentille, tout autre type de contact optique peut être utilisé sans sortir du cadre de l'invention, la caractéristique essentielle de l'invention étant l'utilisation de deux parties distinctes positionnées dans le corps d'un connecteur de façon à obtenir deux contacts optiques distincts, ce qui permet de pouvoir dissocier le câblage de la fibre optique et la connexion optique avec un élément de connexion complémentaire.

De même, les moyens de fixation des contacts optiques ne sont pas nécessairement des dispositifs à vis, tout autre moyen de fixation, tel que par exemple blocage par clip, billage, quart de tout, etc ... peut être utilisé sans sortir du cadre de l'invention. Le montage des deux parties A et B dans le corps du connecteur peut être effectué par l'avant ou par l'arrière sans sortir du cadre de l'invention.

## Revendications

1. Connecteur pour la connexion d'un câble (42) à fibre optique avec un élément de connexion complémentaire, ledit connecteur étant constitué de trois parties distinctes A, B, C, caractérisé en ce que la partie A est destinée au raccordement dudit câble et comporte un embout calibré (41) se terminant en une face de contact optique, et des moyens permettant le positionnement précis de l'extrémité de la fibre optique dans la face du contact optique ; la partie B est une partie interchangeable destinée à la transmission d'un faisceau lumineux et comporte un embout calibré (44) de structure identique à celle de l'embout de la partie A et une fibre optique (43) dont une première extrémité (BO) est fixée dans l'embout calibré (44) de ladite partie B, l'embout de la partie B étant destiné à être mis face à face avec l'embout (41) de la partie A, et dont une deuxième extrémité est fixée à un dispositif faisant contact optique (45) destiné à la connexion optique avec ledit élément de connexion complémentaire ; la partie C comporte un guide calibré (47) pour recevoir les embouts calibrés (41,44) des parties A et B, pour mettre en contact leurs extrémités respectives et pour assurer un alignement coaxial très précis à quelques fractions de micromètres près, des deux embouts (41,44) correspondant à chacune des parties A et B.

2. Connecteur selon la revendication 1, caractérisé en ce que la partie A est un contact optique à pompe et la partie B est un contact optique à lentille.

3. Connecteur selon l'une quelconque des revendications 1 et 2, caractérisé en ce qu'il comporte des moyens de fixation permettant aux parties A et B d'être bloquées en position dans la partie C.

4. Connecteur selon l'une quelconque des revendications précédentes, caractérisé en ce qu'il comport au moins un élément de connexion électrique.

5. Système de connexion comportant un connecteur selon l'une des revendications précédentes et un câble mixte électrique et optique.

6. Système de connexion selon la revendication 5, caractérisé en ce que le câble mixte électrique et optique a une structure triaxiale comportant une fibre optique centrale.

## Patentansprüche

1. Verbinder für die Verbindung eines Lichtleitfaserkabels (42) mit einem komplementären Verbindungselement, wobei der Verbinder aus drei getrennten Teilen A, B, C besteht, dadurch gekennzeichnet, daß das Teil A zum Anschluß des Kabels bestimmt ist und ein kalibriertes Endstück (41), das in einer optischen Kontaktfläche endet, und Mittel aufweist, die die genaue Positionierung des Endes der Lichtleitfaser in der optischen Kontaktfläche erlauben, daß das Teil B ein Austauschteil ist, das für die Übertragung eines Lichtstrahls bestimmt ist und ein kalibriertes Endstück (44) gleicher Struktur wie das Endstück des Teils A und eine Lichtleitfaser (43) enthält, die mit einem ersten Ende (BO) im kalibrierten Endstück (44) des Teils B befestigt ist, das stirnseitig gegenüber dem Endstück (41) des Teils A in Stellung gebracht werden soll, und die mit einem zweiten Ende an einer einen optischen Kontakt (45) bildenden Vorrichtung befestigt ist, die für die optische Verbindung mit dem komplementären Verbindungselement bestimmt ist, und daß das Teil C ein kalibriertes Führungsglied (47) enthält, um die kalibrierten Endstücke (41, 44) der Teile A und B aufzunehmen, ihre jeweiligen Enden miteinander in Berührung zu bringen und eine bis auf Bruchteile eines Millimeters genaue koaxiale Fluchtung der beiden Endstücke (41, 44) zu gewährleisten, die je einem der Teile A und B angehören.

2. Verbinder nach Anspruch 1, dadurch gekennzeichnet, daß das Teil A ein optischer Kontakt mit Pumpe und das Teil ein optischer Kontakt mit Linse ist.

3. Verbinder nach einem beliebigen der Ansprüche 1 und 2, dadurch gekennzeichnet, daß er Befestigungsmittel aufweist, mit denen die Teile A und B im Teil C in ihre Lage festgelegt werden können.

4. Verbinder nach einem beliebigen der vorhergehenden Ansprüche, dadurch gekennzeichnet, daß er mindestens ein elektrisches Verbindungselement enthält.

5. Verbindungssystem, das einen Verbinder gemäß einem der vorhergehenden Ansprüche und ein gemischt elektrisches und optisches Kabel enthält.

6. Verbindungssystem nach Anspruch 5, dadurch gekennzeichnet, daß das gemischt elektrische und optische Kabel eine dreiaxiale Struktur mit einer zentralen Lichtleitfaser enthält.

## Claims

1. A connector intended for connecting an optical fiber cable (42) to a complementary connection element, said connector being composed of three distinct parts A, B, C, characterized in that part A is intended to the connection of the cable and comprises a calibrated end piece (41), whose end constitutes an optical contact surface, and means allowing to precisely position the end of the optical fiber in the optical contact surface, that the part B is an interchangeable part conceived to transmit a light beam and comprises a calibrated end piece (44 of the same structure as that of the part A end piece, and an optical fiber (43) whose first end (BO) is fixed in the calibrated end piece (44) of said part B, the end piece of part B being intended to be put in face to face relationship with the end piece (41) of part A, and whose second end is fixed to a device which establishes an optical contact (45) with said complementary connection element, and that part C comprises a calibrated guide member (47) for receiving the calibrated end pieces (41, 44) of parts A and B in order to establish contact between their respective ends and to ensure a very precise coaxial alignment between the two end pieces (41, 44) each corresponding to one of parts A and B, the precision being in the order of fractions of a micrometer.

2. A connector according to claim 1, characterized in that part A is an optical contact of the pump type and part B is an optical contact of the lens type.

3. A connector according to any one of claims 1 and 2, characterized in that it comprises fixing means allowing the parts A and B to be locked in part C.

4. A connector according to any one of the preceding claims, characterized in that it comprises at least one electrical connection element.

5. A connection system which comprises a connector according to one of the preceding claims and a mixed electrical and optical cable.

6. A connection system according to claim 5, characterized in that the mixed electrical and optical cable presents a triaxial structure including a central optical fiber.
